# EUROPÄISCHE PATENTSCHRIFT

(11) **EP 2 581 329 B1**
(45) Veröffentlichungstag und Bekanntmachung des Hinweises auf die Patenterteilung: **09.07.2014**
(21) Anmeldenummer: 12188177.5
(22) Anmeldetag: 11.10.2012
(51) Int. Cl.: B65G 1/137

(54) **Verfahren zum Kommissionieren von Aufträgen und Hängebahnanlage**
Method for picking orders and overhead conveyor installation
Méthode pour la préparation de commandes et installation de convoyeur suspendu

(30) Priorität: 11.10.2011 DE 102011054391; 15.02.2012 DE 102012101198
(43) Veröffentlichungstag der Anmeldung: 17.04.2013
(73) Patentinhaber: RSL Logistik GmbH & Co. KG, 86899 Landsberg (DE)
(72) Erfinder: Schönenberger, Rolf, 86899 Landsberg am Lech (DE)
(74) Vertreter: Bergmeier, Werner

(56) Entgegenhaltungen:
- JP-A- 58 082 913
- JP-A- 2002 249 209
- US-A- 5 687 851
- US-A1- 2002 070 093

## Beschreibung

Die vorliegende Erfindung betrifft ein Verfahren zum Kommissionieren von Aufträgen nach dem Oberbegriff des Anspruchs 1, sowie eine Hängebahnanlage nach dem Oberbegriff des Anspruchs 15, wie sie aus der US 5, 687, 851 A bekannt sind. Bestehende Logistik- und Kommissioniersysteme sind häufig sehr speziell für bestimmte Waren- und Materialflüsse ausgelegt. Die Systeme sind daher wenig flexibel, wenn sich die Art oder Menge der zu kommissionierenden Waren erheblich ändert. Auch wird bei bestehenden Systemen, insbesondere bei Aufträgen, welche aus einer sehr unterschiedlichen Anzahl von einzelnen Waren bestehen können, ein hoher Flächenbedarf für den Transport, das Zwischenlagern, das Sortieren und das Aus- und Einpacken der Ware benötigt.

Die US 5,687,851 A beschreibt ein Verfahren zum Sortieren einer Mehrzahl einzeln geförderter Gegenstände zu Gruppen in wenigstens einem Sortierschritt in einer Hängefördereinrichtung. Die Gegenstände werden im Wesentlichen unsortiert in einen ersten Förderkreis eingeschleust und von dort auf wenigstens einen zweiten Förderkreis übergeben. Jeder einzelne Gegenstand wird identifiziert. Sobald ein bestimmter, auszusortierender Gegenstand im ersten Förderkreis identifiziert wurde, wird er an den zweiten Förderkreis übergeben. So wird nach und nach eine Sortierung der Gegenstände innerhalb mehrerer, hintereinander angeordneter Förderkreise erzielt. Gegenstände eines Auftrages können hierbei unterschiedlichen ersten und damit verbundenen weiteren Förderkreisen zugeführt werden. Das Zusammenführen mehrerer Gegenstände zu einem Auftrag ist erst mit dem die verschiedenen Sortierförderkreise miteinander verbindenden Wegförderer möglich. Hier werden die Gegenstände der einzelnen Sortierförderkreise zur rechten Zeit dem Wegförderer zur Verfügung gestellt. Dies ist insbesondere zeitaufwändig, da die einzelnen Sortierförderkreise für die Zusammenstellung eines Auftrages zusammenwirken müssen und dabei für andere Aufträge weitgehend blockiert sind.

Aufgabe der vorliegenden Erfindung ist es daher, ein neues Transport- und Sortiersystem zu schaffen, mit welchem Aufträge sehr einfach, flexibel und raumsparend kommissioniert werden können.

Die Aufgabe wird gelöst mit einem Verfahren zum Kommissionieren sowie mit einer Hängebahnanlage gemäß den unabhängigen Patentansprüchen.

Bei dem erfindungsgemäßen Verfahren zum Kommissionieren von Aufträgen mit mindestens einer einem jeweiligen Auftrag zugeteilten Ware ist eine Hängebahnanlage mit Trolleys vorgesehen, wobei die Hängebahnanlage Aufgabeplätze, ein Batchpuffer mit mehreren Strecken und Packplätze sowie Trolley- und Warenidentifikationseinrichtungen aufweist. Ein Trolley wird dabei einem Aufgabeplatz zugeführt und identifiziert. Außerdem wird der Trolley an dem Aufgabeplatz mit einer identifizierten Ware bepackt und die Identifikationen des Trolleys und der Ware werden in einem Verwaltungssystem miteinander verbunden. Trolley und Ware werden hierbei als eine Einheit in dem Verwaltungssystem verwaltet und in der Hängebahn dementsprechend gehandelt. Dabei können auch mehrere als ein Warenstück einem Trolley zugeführt werden.

Der Trolley wird der Strecke des Batchpuffers oder eines Retourwarenpuffers derart zugeführt, dass der Trolley vom Aufgabeplatz oder aus dem Retourwarenpuffer kommend sortiert nach dem zugehörigen Auftrag aber gegebenenfalls chaotisch bezüglich mehrerer Aufträge in der Strecke des Batchpuffers gespeichert wird. Dies bedeutet, dass in einer Strecke des Batchpuffers mehrere Aufträge, welche aus einer unterschiedlich großen Anzahl von einzelnen Waren bzw. Trolleys bestehen können, gesammelt werden können. Je nach Zuführung des Trolleys in die Strecke entsteht hierdurch lediglich eine grobe Vorsortierung nach den einzelnen Aufträgen. Die Waren eines Auftrages sind hierbei aber noch nicht hintereinander angeordnet, sondern möglicherweise durchsetzt von Waren bzw. Trolleys anderer Aufträge.

Nachdem alle Waren des Auftrages in dem Batchpuffer vollständig gespeichert sind bzw. der Auftrag qualifiziert ist zum Abrufen, werden alle Trolleys mit den Waren dieses vervollständigten bzw. qualifizierten Auftrages einem Packplatz zugeführt. An dem Packplatz wird die Ware wieder von dem Trolley getrennt und entsprechend verpackt. Bei der Trennung der Ware von dem Trolley wird erneut die Identifikation der Ware und/oder des Trolleys erfasst und das Verwaltungssystem verwaltet fortan die Ware und den Trolley wieder getrennt voneinander. Ware und Trolley werden sodann wieder unterschiedlich gehandhabt, wobei üblicherweise die Trolleys wieder einer neuen Ware zur Verfügung gestellt werden und in dem Verwaltungssystem wieder erneut mit der neuen Ware verbunden werden.

Durch die Verbindung des Trolleys mit den Erkennungsmerkmalen der Ware kann der Trolley mit der Ware dem Batchpuffer zugeführt werden und dort bereits vorsortiert gespeichert werden. Wenn alle Waren eines Auftrages in dem Verwaltungssystem registriert und in dem Batchpuffer gespeichert sind, werden diese aus der entsprechenden Strecke des Batchpuffers abgerufen und zur Verpackung und zum Versand transportiert.

Das Vorsortieren in einer Strecke des Batchpuffers erleichtert den Transport des gesamten Warenbestandes erheblich. Bereits beim Zuordnen der Ware zu dem Trolley stehen Eigenschaften des Auftrages fest und der Trolley wird gezielt in eine für diesen Auftrag reservierte Strecke transportiert. Die Strecke muss durch das erfinderische Verfahren nicht ausschließlich für diesen einen Auftrag reserviert sein, sondern in dieser Strecke können mehrere Aufträge chaotisch, das heißt, nacheinander, so wie sie gerade der Strecke zugeführt werden, abgespeichert und zwischengelagert werden. Sobald ein vorbestimmtes Kriterium erfüllt ist, insbesondere wenn ein Auftrag komplett ist, wird dieser eine Auftrag aus der Strecke ausgeschleust und dem Packplatz zugeführt. Die übrigen Aufträge, die in dieser Strecke des Batchpuffers vorsortiert gespeichert sind, verbleiben beispielsweise solange in diesem Batchpuffer bis ihr jeweiliger Auftrag ebenfalls komplett oder qualifiziert ist. Es ist auch möglich, dass beim Ausschleusen eines qualifizierten Auftrages aus der Strecke des Batchpuffers alle Trolleys dieser Strecke, auch die noch nicht qualifizierter Aufträge ebenfalls ausgeschleust werden. Diese werden aber wiederum dieser oder einer anderen Strecke des Batchpuffers erneut zugeführt und verbleiben dort bis deren Auftrag oder ein anderer Auftrag aus dieser Strecke komplett bzw. qualifiziert ist und abgerufen wird.

Vorteilhafterweise werden Trolleys mehrerer Aufträge in einer Strecke des Batchpuffers gespeichert. Dies ist insbesondere dann der Fall, wenn die Anzahl der Trolleys, welche für einen Auftrag zusammengestellt werden müssen, geringer ist als die Aufnahmekapazität dieser Strecke. Die verbleibende Strecke muss dann nicht leer bleiben bis dieser Auftrag komplettiert ist, sondern kann zwischenzeitlich für andere Aufträge genutzt werden. Die Anlage ist damit optimal nutzbar und entsteht sehr wenig ungenutzte Lagerkapazität.

Die Aufteilung einer Strecke auf mehrere Aufträge gilt natürlich nicht für den Fall, dass ein Auftrag eine so große Anzahl von Trolleys benötigt, dass die komplette Strecke für einen Auftrag belegt ist. In dem Verwaltungssystem kann dies anhand der Auftragsgröße vorherbestimmt werden und damit festgelegt werden, welche Aufträge zusammengestellt werden um die Auslastung einer Strecke des Batchpuffers möglichst lückenlos zu ermöglichen. Damit wird der komplette Batchpuffer maximal belegt und der für den Batchpuffer benötigte Lagerraum kann hierdurch minimiert werden.

In einer bevorzugten Ausführung des Kommissionierverfahrens werden nur Trolleys qualifizierter Aufträge aus der Strecke des Batchpuffers dem Packplatz zugeführt. Qualifizierte Aufträge können dabei entweder Aufträge sein, welche alle dem Auftrag zugehörigen Waren bzw. Trolleys enthalten. Aufträge können aber auch qualifiziert sein, wenn festgestellt wurde, dass sich die Auslieferung bestimmter Waren verzögert und es vorteilhaft ist, wenn der Auftrag, auch wenn er noch nicht komplett ist, bereits verpackt und versandt wird.

Vorzugsweise verbleiben Trolleys nicht qualifizierter Aufträge in der Strecke des Batchpuffers oder werden wieder einer Strecke des Batchpuffers zugeführt. Da in der Strecke des Batchpuffers die Waren unterschiedlicher Aufträge chaotisch vorsortiert sind, ist es in den meisten Fällen vorteilhaft, wenn alle Waren dieser Strecke ausgeschleust werden, wobei die Waren bzw. Trolleys des qualifizierten Auftrages dem Packplatz zugeführt werden, während die Waren der noch nicht qualifizierten Aufträge wieder derselben oder einer anderen Strecke des Batchpuffers zugeführt werden. Wenn es vorteilhaft ist, kann hierdurch bereits eine weitere Vorsortierung erfolgen, indem die chaotische Reihenfolge der Waren verschiedener Aufträge bereits durch die Zuordnung in unterschiedliche Strecken erfolgt und hierdurch mehr Trolleys eines Auftrages in direkter Reihenfolge hintereinander folgen. Dies kann die weitere Kommissionierung vereinfachen, ist aber nicht in jedem Falle erforderlich.

Vorzugsweise wird die Strecke des Batchpuffers geleert sobald ein vorbestimmtes Kriterium, beispielsweise Bearbeitungspriorität, Speicherzeit oder Anzahl, Prozentzahl oder Belegung der qualifizierten Aufträge einer Strecke erfüllt ist. Diese Kriterien um einen Auftrag als qualifiziert für die weitere Bearbeitung zu kennzeichnen, dienen dazu auch Aufträge weiter zu bearbeiten, welche noch nicht komplett sind. Andererseits ist hierdurch auch gewährleistet, dass eine Waren- bzw. Trolleybewegung nicht sofort erfolgen muss, wenn ein bestimmter Auftrag komplett ist. Es kann auch vorteilhafter sein, wenn erst abgewartet wird, bis eine bestimmte Anzahl von Aufträgen oder eine bestimmte Belegungsmenge der Strecke mit qualifizierten Aufträgen erreicht ist, bevor diese Strecke geleert wird und die qualifizierten Aufträge zu den Packplätzen geschickt werden.

Vorteilhaft kann es auch sein, wenn die Trolleys mehrerer qualifizierter Aufträge in einer Strecke des Batchpuffers mehreren Sortierstrecken eines Sorters zugeführt werden bevor sie dem Packplatz zugeführt werden. Dies birgt insbesondere dann Vorteile in sich, wenn die Art der Verpackung oder auch die Art des Versandes dieser Aufträge ähnlich sind. Hierdurch kann gewährleistet werden, dass an den Packplätzen Aufträge mit gleichartigen Kriterien nacheinander abgearbeitet werden und sich somit weitere Vorteile beispielsweise im Versand ergeben, da mehrere Aufträge beispielsweise mit demselben Versandunternehmen versandt werden können.

Vorteilhaft ist es insbesondere, wenn die Trolleys in einer Sortierstrecke des Sorters auftragsrein gepuffert werden. Hierdurch ist eine weitere Sortierung der Trolleys eines Auftrages bewirkt. Für die Verpackung eines Auftrages ist sodann lediglich erforderlich eine oder mehrere Sortierstrecken abzurufen, welche nur diesen einen Auftrag enthalten.

Werden Trolleys verschiedenen Aufträge bzw. Sortierstrecken demselben Packplatz zugeführt, wenn sie einem vorbestimmten Kriterium, beispielsweise Versandart oder Versandpriorität entsprechen, so ist hierdurch ebenfalls eine sehr schnelle und angepasste sowie kostengünstige Weiterverarbeitung des kompletten Auftrages ermöglicht. Hieraus ist ersichtlich, dass die vorliegende Erfindung besonders flexibel ist und das gesamte Logistiksystem vom Bestücken der Waren an den Trolleys bis zum Verlassen der Waren aus dem Lager berücksichtigt. Das Verfahren ist dementsprechend individuell gestaltbar und auch für Änderungen sehr flexibel.

Nachdem die Waren an dem Packplatz von dem Trolley entfernt wurden, verwaltet das Verwaltungssystem die Trolleys und die Waren wiederum getrennt voneinander. Die geleerten Trolleys werden anschließend einem Leertrolleypuffer zugeführt, wo sie für die weitere und erneute Verwendung zur Verfügung stehen und abgerufen werden können.

Werden die Trolleys in dem Leertrolleypuffer sortiert nach Trolleyart gepuffert, so können unterschiedliche Arten von Trolleys verwaltet werden und je nach Bedarf an die einzelnen Aufgabeplätze geschickt werden.

Ist in das Kommissionierverfahren auch ein Retourwarenpuffer mit eingebunden, so können Trolleys in dem Retourwarenpuffer analog zu dem Verfahren in dem Batchpuffer (8) behandelt und sortiert zugeführt werden. Es ist dabei nicht erforderlich immer nur Neuware, welche an dem Abgabeplatz in das System eingeführt wird für die erneute Zuordnung in Aufträge zur Verfügung zu stellen, sondern es können auch Waren, welche von Kunden zurückgesandt wurden und in dem Retourwarenpuffer zwischengespeichert wurden in den neuen Auftrag eingeschleust werden.

Sind Trolleys in dem Retourwarenpuffer mit Warenkriterien versehen und können sie einzeln bestimmten Aufträgen zugeordnet werden, so können die Trolleys bestimmten Aufträgen, bei denen die Waren der Trolleys aus dem Retourwarenpuffer benötigt werden, zugeschleust werden oder sogar ganz damit bestückt werden.

Besonders vorteilhaft ist es, wenn bevorzugt die Waren bzw. die Trolleys aus dem Retourwarenpuffer dem Batchpuffer zugeführt werden. Hierdurch wird vermieden, dass Waren, welche bereits in dem Lagerbestand sind, unnötig veralten.

Um bereits in dem Retourwarenpuffer eine Vorsortierung durchführen zu können, ist es vorteilhaft, wenn der Retourwarenpuffer einzelne Strecken aufweist. In den Strecken des Retourwarenpuffers können so die Trolleys sortiert nach vorbestimmten Kriterien, wie beispielsweise Anforderungshäufigkeit oder Anzahl der Retouren dieser Waren gespeichert werden.

Werden Trolleys zur Komplettierung eines Auftrages aus dem Retourwarenpuffer und/oder vom Aufgabeplatz einer Strecke des Batchpuffers zugeführt, so können die Retourwaren bei laufenden Aufträgen erneut in den Versand gebracht werden.

Werden Trolleys in dem Batchpuffer und/oder dem Retourwarenpuffer an den entsprechenden Strecken aus- und eingeschleust zum Sortieren der Trolleys nach vorbestimmten Warenkriterien, so kann sowohl im Batchpuffer als auch im Retourwarenpuffer nach dem vorteilhaften Verfahren eine Sortierung bzw. Vorsortierung nach vorgegebenen Kriterien, beispielsweise den Waren des Auftrages erfolgen.

In einer vorteilhaften Ausführung des Verfahrens werden Trolleys in dem Batchpuffer und/oder in dem Retourwarenpuffer zwischen dem Auftragseingang und dem Zuführen der Trolleys eines Auftrages an den Packplatz aus- und eingeschleust zum Sortieren der Trolleys nach vorbestimmten Auftragskriterien. Hierdurch wird es ermöglicht, den Auftrag, sobald alle Teile bereitgestellt sind, schnell dem Packplatz zuzuführen.

Werden Trolleys in dem Batchpuffer und/oder in dem Retourwarenpuffer vor dem Zuführen der Trolleys eines Auftrages an den Packplatz in ein Karussell geschleust werden zum Sortieren der Trolleys nach vorbestimmten Auftragskriterien. In dem Karussell können Trolleys umgeschleust werden, wobei sie beispielsweise zum Umsortieren oder Zwischenpuffern aus einer Strecke des Puffers in das Karussell eingeschleust und danach wieder, z.B. in geänderter Reihenfolge, einer Strecke des Puffers zugeführt werden.

Werden die Packplätze zum Kommissionieren von Aufträgen oder alternativ zum Erfassen von Retouren benutzt, so kann das gleich oder nur leicht abgewandelte Ablaufverfahren sowohl für Neuwaren als auch für zurückgesandte Waren eingesetzt werden.

Eine erfindungsgemäße Hängebahnanlage zum Kommissionieren von Aufträgen mit mindestens einer einem jeweiligen Auftrag zugeteilten Ware und/oder zum Retourenmanagement, mit Trolleys sowie mit Aufgabeplätzen, einem Batchpuffer mit mehreren Strecken und Packplätzen weist Identifikationseinrichtungen auf, welche an den Trolleys und den Waren angeordnet sind. Die Aufgabeplätze, der Batchpuffer und die Packplätze sind mit Hängebahnschienen miteinander verbunden. Die Hängebahnanlage weist darüber hinaus ein Verwaltungssystem auf, mit welchem ein Trolley mit einer oder mehreren Waren identifiziert und zeitweise verknüpft werden kann. Hierfür sind im Bereich des Aufgabeplatzes und des Packplatzes Identifikationserfassungseinrichtungen für einen Trolley und die Ware angeordnet, wobei die Identifikationserfassungseinrichtungen mit dem Verwaltungssystem verbunden sind. Trolley und Waren werden durch die Identifikationserfassungseinrichtungen erkannt und können so zu einer Einheit verknüpft und zum Schluss der Kommissionierung wieder voneinander getrennt werden.

Vorzugsweise ist in der Hängebahn zwischen Batchpuffer und Packplatz ein Sorter angeordnet. In dem Sorter kann eine Sortierung der Waren je nach Aufträgen erfolgen. Auch wenn in dem Batchpuffer die Trolleys bzw. Waren noch chaotisch gesammelt wurden, so können sie in dem Sorter je nach Auftrag sortiert werden, so dass sie schließlich sortenrein in dem Sorter aufgereiht sind.

Vorzugsweise weist der Sorter mehrere Sortierstrecken auf, die zusammen mindestens die Kapazität einer Strecke des Batchpuffers haben. Hierbei ist es möglich, dass bei der Entleerung einer Strecke des Batchpuffers alle Trolleys dieses Batchpuffers dem Sorter zugeführt werden und eine entsprechende Sortierung nach Aufträgen erfolgen kann.

Weiterhin ist der Hängebahn vorzugsweise ein Leertrolleypuffer zugeordnet. In dem Leertrolleypuffer können die nicht beladenen Trolleys in einer Warteposition stehen, aus welcher sie für die erneute Beladung mit Waren abgerufen werden können.

Vorteilhaft ist es, wenn der Hängebahn ein Retourwarenpuffer zugeordnet ist. In dem Retourwarenpuffer werden Trolleys eingeschleust mit Waren, welche bereits ausgeliefert waren und nun an das Lager beispielsweise wegen Umtausch zurückgesandt wurden.

Um besonders platzsparend die Waren in einer Lagerhalle lagern zu können, ist vorgesehen, dass der Batchpuffer überkopf der Aufgabeplätze und/oder der Packplätze angeordnet ist. Das System arbeitet vollautomatisch, so dass es in der Regel nicht erforderlich ist, dass Personen im Bereich des Batchpuffers eingreifen müssen. Darüber hinaus ist hierdurch sichergestellt, dass Waren aus dem Verwaltungssystem nicht manuell entfernt werden können und es somit zu Fehllieferung bzw. Fehlkommissionierungen der Aufträge kommen würde.

Vorzugsweise ist der Batchpuffer mittels eines oder mehrerer Schrägförderer mit den Aufgabeplätzen und/oder den Packplätzen verbunden. Hierdurch ist eine Beförderung der Trolleys von den einzelnen Plätzen in den Batchpuffer und aus diesem wieder heraus möglich. Mehrere Schrägförderer können damit auch jeweils für den Weg nach oben und/oder den Weg nach unten eingesetzt werden.

Ist am Packplatz eine Schleuse vorgesehen, so können mehrere Trolleys, welche einem Auftrag zugeordnet sind, in Nähe dieses Packplatzes positioniert werden und der Packer kann den kompletten Auftrag aus den ihm zur Verfügung stehenden Trolleys bzw. aus den Waren zusammenstellen.

Um eine Anpassung der Transportmittel an die zu transportierenden Waren vornehmen zu können, ist es vorteilhaft, wenn die Trolleys je nach zu transportierender Ware unterschiedlich aufgebaut sind. So können sich insbesondere Bügeltrolleys, Klappboxtrolleys und/oder Minitrolleys anbieten, wobei die Bügeltrolleys in der Lage sind einzelne Waren aufzunehmen, in den Klappboxtrolleys die Waren in eine Box eingelegt und gehalten werden können, während an den Minitrolleys beispielsweise Beutel angeordnet sind, in welche mehrere Kleinwaren eingelegt werden können.

In einer vorteilhaften Ausführung der Erfindung sind die Strecken des Batchpuffers und/oder des Retourwarenpuffers ein- oder mehretageig und/oder in einem oder mehreren Gebäuden oder Gebäudeteilen angeordnet. Insbesondere bei einer mehretagigen Anordnung kann Hallengrundfläche des Lager- und Kommisionierbereichs verringert werden. Bei einer einetageigen Ausführung sind aufwändige Schrägförderer oder Lifte zu vermeiden.

Ist einem oder mehreren der Puffer oder Sorter, insbesondere den Strecken des Batchpuffers und/oder des Retourwarenpuffers ein Karussell zugeordnet, so ist das Zwischenlagern oder Umsortieren der Trolleys bzw. Waren besonders einfach möglich. Bei Bedarf werden sie nach ein- oder mehrmaligem Durchlaufen des Karussells einer Strecke des Puffers oder Sorters zugeführt.

Weitere Vorteile der Erfindung sind anhand der nachfolgenden Ausführungsbeispiele beschrieben. Es zeigt:
- **Figur 1**: ein Layout einer ersten Ebene eines Transport- und Sortiersystems und
- **Figur 2**: ein mit dem Layout der Figur 1 korrespondierendes Layout einer zweiten Ebene des Transport- und Sortiersystems.

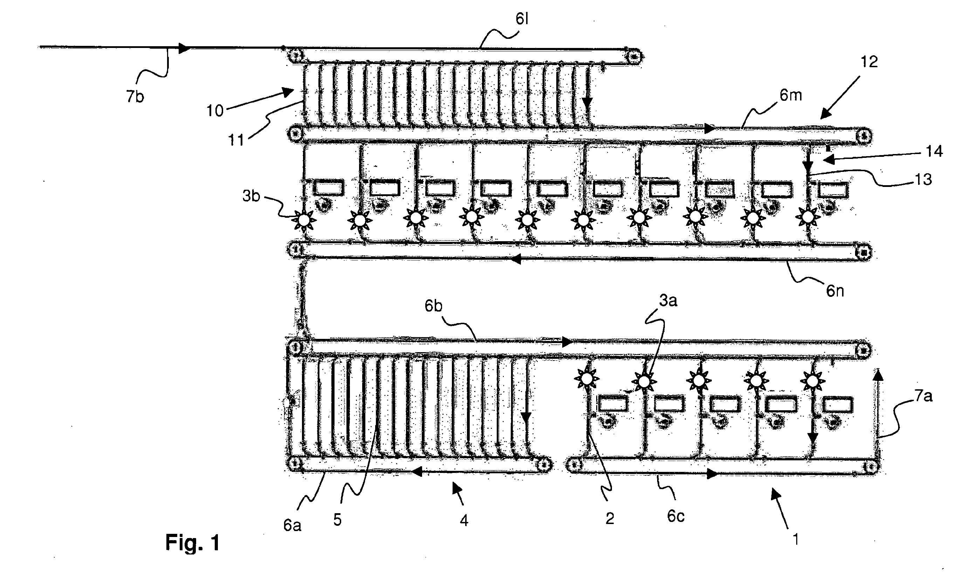

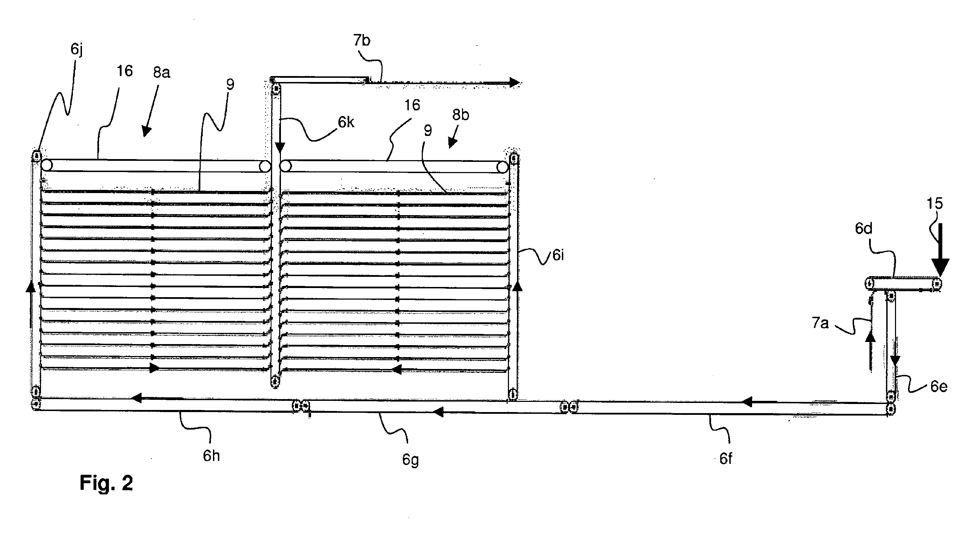

Figur 1 und Figur 2 zeigen ein gesamtes Layout eines Transport- und Sortiersystems einer Hängebahnanlage, mit welchem das erfindungsgemäße Verfahren zum Kommissionieren von Aufträgen durchführbar ist. Die erfindungsgemäße Hängebahnanlage ist aufgeteilt in verschiedene Bereiche, in welchen Arbeitsschritte der Kommissionierung durchgeführt werden und ist darüber hinaus in zwei Ebenen angeordnet, wobei gemäß diesem Ausführungsbeispiel das Layout der Figur 1 ebenerdig und das Layout der Figur 2 oberhalb dieser ersten Ebene in einer zweiten Ebene einer Lagerhalle angeordnet ist.

In dem Layout der Figur 1 sind fünf Aufgabeplätze 1 vorgesehen. An jedem Aufgabeplatz 1 ist eine Aufgabestrecke 2 angeordnet, welche entlang des Aufgabeplatzes 1 geführt ist. An jedem Aufgabeplatz 1 ist darüber hinaus eine Identifikationserfassungseinrichtung 3a angeordnet, mit welcher Identifikationseinrichtungen von Trolleys und von an dem Aufgabeplatz 1 ausgepackter Ware erfasst wird und über ein Verwaltungssystem, welches hier nicht dargestellt ist, miteinander verbunden werden.

Beim Auspacken der Ware an den Aufgabeplatz 1 wird ein Trolley aus einem Leertrolleypuffer 4 angefordert. Der Leertrolleypuffer 4 weist eine Vielzahl von Leertrolleystrecken 5 auf, in welchen leere Trolleys gespeichert sind. Die leeren Trolleys können sortiert je nach ihrer Bauart in jeweils einer Leertrolleystrecke 5 angeordnet sein oder auch chaotisch in dem Leertrolleypuffer 4 abgestellt sein.

Der angeforderte Leertrolley wird aus dem Leertrolleypuffer 4 über einen Hängeförderer 6a und 6b in die jeweilige Aufgabestrecke 2 gefördert. Dort wird der Leertrolley mit Ware bepackt, die Identifikationen von Ware und Trolley mit der Identifikationserfassungseinrichtung 3a erfasst, an das Verwaltungssystem geschickt und dort vereint. Der nun bepackte Trolley wird über einen nachfolgenden Hängeförderer 6c weiterbefördert. Der Hängeförderer 6c ist mit einem Schrägförderer 7a verbunden, welcher den Trolley in eine zweite Ebene befördert. Über die anschließenden Hängeförderer 6d, 6e, 6f, 6g, 6h, 6i sowie 6j wird der Trolley einem Batchpuffer 8a oder 8b zugeführt.

Jeder der Batchpuffer 8a bzw. 8b weist mehrere Batchpufferstrecken 9 auf. Der Trolley wird auftragsbezogen in eine für diesen Auftrag vorgesehene Batchpufferstrecke 9 bewegt. In der Batchpufferstrecke 9 können verschiedene Aufträge chaotisch, das heißt in nicht sortierter Reihenfolge zwischengespeichert sein. Werden vorbestimmte Kriterien erfüllt, zum Beispiel wird festgestellt, dass einer oder mehrere der Aufträge, welche in der jeweiligen Batchpufferstrecke 9 gespeichert sind, vervollständigt sind oder die Vervollständigung zu lange dauern würde, so dass eine Vorabversendung des Auftrages vorteilhaft ist, wird der Stau in der Batchpufferstrecke 9 aufgelöst. Hierzu werden die Trolleys in der Batchpufferstrecke 9 über den Hängeförderer 6k ausgeschleust. Trolleys, welche noch nicht qualifiziert sind für den Versand, weil beispielsweise der Auftrag noch nicht komplett ist und sie weiter in dem Batchpuffer 8a oder 8b gespeichert werden sollen, werden in dieselbe oder eine andere Batchpufferstrecke 9 wieder zurückbefördert. Dies kann entweder durch eine entsprechende Weichenschaltung ausgehend von dem Hängeförderer 6k erfolgen oder durch zusätzliche, der Übersichtlichkeit halber nicht eingezeichnete Hängeförderer oder durch ein Karussell 16 erfolgen, welche z.B. die noch nicht qualifizierten Trolleys beispielsweise über die Hängeförderer 6i oder 6j zurück in die jeweilige Batchpufferstrecke 9 führen. Das Karussell 16 kann Trolleys aufnehmen und in geänderter Reihenfolge wieder abgeben oder sie einfach nur zwischenspeichern, bis sie für einen Auftrag benötigt werden. Ein derartiges Karussell 16 kann an nur einem Batchpuffer 8a oder 8b oder an beiden Batchpuffern 8a, 8b vorgesehen sein. Außerdem kann er auch im Retourpuffer 15 oder am Sorter, insbesondere Matrixsorter 10 angeordnet sein.

Die Trolleys eines qualifizierten Auftrages werden über den Hängeförderer 6k und den daran anschließenden Schrägförderer 7b wieder zurück in die erste Ebene befördert. Es können beispielsweise auch mehrere Schrägförderer 7b eingesetzt werden, die beispielsweise parallel zueinander angeordnet sind. Damit kann bei Bedarf nochmals eine Umsortierung der Artikel erfolgen. Nach dem Schrägförderer 7b ist ein Hängeförderer 6l vorgesehen, welcher an einen Sorter 10 angeschlossen ist, welcher eine Vielzahl von Sortierstrecken 11 aufweist. Der Sorter 10 kann wie abgebildet, aber auch als Matrixsorter, ähnlich dem Batchpuffer 8 ausgebildet sein. Die zugeführten Trolleys werden in dem Sorter 10 sortenrein in den jeweiligen Sortierstrecken 11 zwischengespeichert. Auch unsortierte Trolleys mehrerer Aufträge, welche aus der Batchpufferstrecke 9 angeliefert werden, können hier aufgeteilt werden, indem sie auftragsbezogen einer jeweiligen Sortierstrecke 11 zugeführt werden.

Nachfolgend an den Sorter 10 sind Packplätze 12 vorgesehen. Aus dem Sorter 10 werden die Trolleys eines Auftrages über den anschließenden Hängeförderer 6m den Packplätzen 12 zugeführt. Die Packplätze 12 weisen eine Vielzahl von Packplatzstrecken 13 auf, welche einem jeweiligen Packplatz zugeordnet sind. An jeder Packplatzstrecke 13 ist eine Schleuse 14 vorgesehen, in welcher die Trolleys eines Auftrages gesammelt werden. Der Packer hat nunmehr die Möglichkeit die angelieferten Trolleys zu entladen und die daran befindlichen Waren entsprechend des Auftrages zu verpacken. Die jeweilige Packplatzstrecke 13 ist wiederum eine Identifikationserfassungseinrichtung 3b zugeordnet. Mit dieser Identifikationserfassungseinrichtung wird der nunmehr leere Trolley erfasst und als freier Trolley gekennzeichnet. An dieser Stelle wird das Verwaltungssystem darüber informiert, dass die Verbindung zwischen Trolley und Ware an dieser Stelle aufgehoben wurde. Die entsprechend verpackte Ware kann für den weiteren Versand fertig gemacht werden. Der leere Trolley wird über den Hängeförderer 6n und 6b wieder dem Leertrolleypuffer 4 zugeführt und steht für eine erneute Beladung zur Verfügung.

Mit dem dargestellten System ist einerseits die Beladung der Trolleys mit neuen Waren in Aufgabeplätzen 1 möglich. Darüber hinaus ist es auch möglich die Trolleys mit Retourwaren beladen dem Batchpuffer 8a oder 8b zuzuführen. Wird festgestellt, dass für einen bestimmten Auftrag im Retourpuffer 15 eine geeignete Ware vorhanden ist, so wird diese beispielsweise dem Hängeförderer 6d zugeführt. Anschließend an den Hängeförderer 6d wird diese Retourware mit ihrem Trolley wie eine neue Ware weiterbehandelt. Die Einschleusung der Retourware kann nach bestimmten vorgegebenen Kriterien erfolgen. So ist es möglich, dass festgelegt wird, dass die Retourware vor einer Neuware zu verarbeiten ist. Auch kann der Retourwarenpuffer nach bestimmten Kriterien sortiert befüllt sein. Solche Kriterien sind beispielsweise Alter der Retourware oder Bedarf der Retourware. Der Retourwarenpuffer 15 kann ähnlich wie der Batchpuffer 8 als Überkopfpuffer gestaltet sein. Alternativ kann er selbstverständlich auch in der ersten Ebene angeordnet sein und beispielsweise über den Schrägförderer 7a dem Batchpuffer 8 zugeführt werden.

Das dargestellte Layout kann beliebig verändert sein. Es ist nicht auf die hier dargestellte Ausführung beschränkt. Insbesondere ist es zwar vorteilhaft, wenn der Batchpuffer 8 und/oder der Retourwarenpuffer 15 überkopf angeordnet ist, bei entsprechendem Platz ist aber auch eine ebenerdige Anordnung möglich. Die vorliegende Erfindung ist dementsprechend nicht auf das hier gezeigte Layout beschränkt. Auch die Anzahl der einzelnen Strecken, Aufgabeplätze, Packplätze oder Puffer ist nicht auf die hier dargestellte Ausführung beschränkt. Ebenso kann selbstverständlich vorgesehen sein, dass die Aufgabe- und/oder Packplätze auch manuell beschickt werden können. Der Batchpuffer 8 oder der Retourpuffer 15 können ebenso wie das Karussell 16 auch als Puffer für Leertrolleys verwendet werden, insbesondere wenn die Anlage leergefahren werden soll, also mehr Leertrolleys als üblich vorhanden sind und daher der Platz in dem Leertrolleypuffer 4 nicht ausreicht.

### Bezugszeichenliste

- 1: Aufgabeplatz
- 2: Aufgabestrecke
- 3: Identifikationserfassungseinrichtung
- 4: Leertrolleypuffer
- 5: Leertrolleystrecke
- 6: Hängeförderer
- 7: Schrägförderer
- 8: Batchpuffer
- 9: Batchpufferstrecke
- 10: Sorter
- 11: Sortierstrecken
- 12: Packplätze
- 13: Packplatzstrecken
- 14: Schleuse
- 15: Retourpuffer
- 16: Karussell

## Patentansprüche

1. Verfahren zum Kommissionieren von Aufträgen mit mindestens einer einem jeweiligen Auftrag zugeteilten Ware und/oder zum Retourenmanagement,
- mit einer Hängebahnanlage mit Trolleys, sowie
- mit Aufgabeplätzen (1), einem Batchpuffer (8) mit mehreren Strecken (9) und Packplätzen (12),
- wobei die Trolleys und die Waren Identifikationseinrichtungen aufweisen,
**dadurch gekennzeichnet,**
- **dass** ein Trolley einem Aufgabeplatz (1) zugeführt und identifiziert wird,
- **dass** der Trolley an dem Aufgabeplatz (1) mit einer identifizierten Ware bepackt wird,
- **dass** die Identifikationen des Trolleys und der auch aus mehreren Warenstücken bestehenden Ware in einem Verwaltungssystem miteinander verbunden werden,
- **dass** der Trolley einer Strecke (9) des Batchpuffers (8) oder eines Retourwarenpuffers (15) zugeführt wird,
- **dass** der Trolley vom Aufgabeplatz (1) oder aus dem Retourwarenpuffer (15) kommend, sortiert nach dem zugehörigen Auftrag, aber gegebenenfalls chaotisch bzgl. mehrerer Aufträge, gezielt in eine für diesen Auftrag reservierte Strecke (9) des Batchpuffers (8) transportiert und in dieser Strecke (9) des Batchpuffers (8) gespeichert wird,
- **dass**, nachdem alle Waren des Auftrags in dem Batchpuffer (8) vollständig gespeichert sind, alle Trolleys mit den Waren des Auftrages einem Packplatz (12) zugeführt werden und
- **dass** bei der Trennung der Ware von dem Trolley die Identifikation der Ware und/oder des Trolleys erfasst wird und das Verwaltungssystem die Ware und den Trolley fortan wieder getrennt verwaltet.

2. Verfahren nach Anspruch 1, **dadurch gekennzeichnet, dass** Trolleys mehrerer Aufträge in einer Strecke (9) des Batchpuffers (8) gespeichert werden.

3. Verfahren nach einem oder mehreren der vorherigen Ansprüche, **dadurch gekennzeichnet, dass** nur Trolleys qualifizierter Aufträge aus der Strecke (9) des Batchpuffers (8) dem Packplatz (12) zugeführt werden und dass Trolleys nicht qualifizierter Aufträge in der Strecke (9) des Batchpuffers (8) verbleiben oder wieder einer Strecke (9) des Batchpuffers (8) zugeführt werden..

4. Verfahren nach einem oder mehreren der vorherigen Ansprüche, **dadurch gekennzeichnet, dass** die Strecke (9) des Batchpuffers (8) geleert wird, sobald ein vorbestimmtes Kriterium, beispielsweise Bearbeitungspriorität, Speicherzeit oder Anzahl, Prozentzahl oder Belegung der qualifizierten Aufträge einer Strecke (9) erfüllt ist.

5. Verfahren nach einem oder mehreren der vorherigen Ansprüche, **dadurch gekennzeichnet, dass** die Trolleys mehrerer qualifizierter Aufträge einer Strecke (9) des Batchpuffers (8) mehreren Sortierstrecken (11) eines Sorters (10) zugeführt werden bevor sie dem Packplatz (12) zugeführt werden und dass insbesondere die Trolleys in einer Sortierstrecke (11) auftragsrein gepuffert werden.

6. Verfahren nach einem oder mehreren der vorherigen Ansprüche, **dadurch gekennzeichnet, dass** die Trolleys verschiedener Aufträge bzw. Sortierstrecken (11) dem selben Packplatz (12) zugeführt werden, wenn sie einem vorbestimmten Kriterium, beispielsweise Versandart oder Versandpriorität entsprechen.

7. Verfahren nach einem oder mehreren der vorherigen Ansprüche, **dadurch gekennzeichnet, dass** die geleerten Trolleys einem Leertrolleypuffer (4) zugeführt werden und dass die Trolleys in dem Leertrolleypuffer (4) insbesondere sortiert nach Trolleyart gepuffert werden.

8. Verfahren nach einem oder mehreren der vorherigen Ansprüche, **dadurch gekennzeichnet, dass** die Trolleys in dem Retourwarenpuffer (15) analog zu dem Verfahren in dem Batchpuffer (8) behandelt und sortiert werden.

9. Verfahren nach einem oder mehreren der vorherigen Ansprüche, **dadurch gekennzeichnet, dass** die Trolleys in dem Retourwarenpuffer (15) mit Warenkriterien versehen sind und einzeln bestimmten Aufträgen zugeordnet werden können.

10. Verfahren nach einem oder mehreren der vorherigen Ansprüche, **dadurch gekennzeichnet, dass** die Trolleys bevorzugt aus dem Retourwarenpuffer (15) dem Batchpuffer (8) zugeführt werden und dass Trolleys in dem Retourwarenpuffer (15) in einzelnen Strecken insbesondere sortiert nach vorbestimmten Kriterien, wie beispielsweise Anforderungshäufigkeit gepuffert werden.

11. Verfahren nach einem oder mehreren der vorherigen Ansprüche, **dadurch gekennzeichnet, dass** Trolleys zur Komplettierung eines Auftrages aus dem Retourwarenpuffer (15) und/oder vom Aufgabeplatz (1) einer Strecke (9) des Batchpuffers (8) zugeführt wird.

12. Verfahren nach einem oder mehreren der vorherigen Ansprüche, **dadurch gekennzeichnet, dass** Trolleys in dem Batchpuffer (8) und/oder dem Retourwarenpuffer (15) an den entsprechenden Strecken aus- und eingeschleust werden und/oder dass Trolleys in dem Batchpuffer (8) und/oder in dem Retourwarenpuffer (15) zwischen dem Auftragseingang und dem Zuführen der Trolleys eines Auftrages an den Packplatz (12) aus- und eingeschleust werden zum Sortieren der Trolleys nach vorbestimmten Warenkriterien.

13. Verfahren nach einem oder mehreren der vorherigen Ansprüche, **dadurch gekennzeichnet, dass** Trolleys in dem Batchpuffer (8) und/oder in dem Retourwarenpuffer (15) vor dem Zuführen der Trolleys eines Auftrages an den Packplatz (12) in ein Karussell (16) geschleust werden zum Sortieren der Trolleys nach vorbestimmten Auftragskriterien.

14. Verfahren nach einem oder mehreren der vorherigen Ansprüche, **dadurch gekennzeichnet, dass** die Packplätze (12) alternativ zum Kommissionieren von Aufträgen oder zum Erfassen von Retouren benutzt werden.

15. Hängebahnanlage zum Kommissionieren von Aufträgen mit mindestens einer einem jeweiligen Auftrag zugeteilten Ware und/oder zum Retourenmanagement,
- mit Trolleys, sowie
- mit Aufgabeplätzen (1), einem Batchpuffer (8) mit mehreren Strecken (9) und Packplätzen (12),
- wobei die Aufgabeplätze (1), der Batchpuffer (8) und die Packplätze (12) mit Hängebahnschienen miteinander verbunden sind und
- wobei die Trolleys und die Waren Identifikationseinrichtungen aufweisen, zum Durchführen des Verfahrens nach einem oder mehreren der vorherigen Ansprüche,
**dadurch gekennzeichnet,**
- **dass** die Hängebahnanlage ein Verwaltungssystem aufweist, zum Identifizieren und zeitweisen Verknüpfen von einem Trolley mit einer auch aus mehreren Warenstücken bestehenden Ware,
- **dass** im Bereich des Aufgabeplatzes (1) und des Packplatzes (12) Identifikationserfassungseinrichtungen (3) für einen Trolley und die Ware angeordnet sind und
- **dass** die Identifikationserfassungseinrichtungen (3) mit dem Verwaltungssystem verbunden sind.

16. Hängebahnanlage nach dem vorherigen Anspruch, **dadurch gekennzeichnet, dass** zwischen Batchpuffer (8) und Packplatz (12) ein Sorter (10), insbesondere ein Matrixsorter, angeordnet ist.

17. Hängebahnanlage nach einem der Ansprüche 15-16, **dadurch gekennzeichnet, dass** der Sorter (10) mehrere Sortierstrecken (11) aufweist, die zusammen zumindest die Kapazität einer Strecke (9) des Batchpuffers (8) aufweisen.

18. Hängebahnanlage nach einem der Ansprüche 15-17, **dadurch gekennzeichnet, dass** der Hängebahnanlage ein Leertrolleypuffer (4) und/oder ein Retourwarenpuffer (15) zugeordnet ist.

19. Hängebahnanlage nach einem der Ansprüche 15-18, **dadurch gekennzeichnet, dass** der Batchpuffer (8) überkopf der Aufgabeplätze (1) und/oder der Packplätze (12) angeordnet ist und dass der Batchpuffer (8) insbesondere mittels eines oder mehrerer Schrägförderer (7) mit den Aufgabeplätzen (1) und/oder den Packplätzen (12) verbunden ist.

20. Hängebahnanlage nach einem der Ansprüche 15-19, **dadurch gekennzeichnet, dass** am Packplatz (12) eine Schleuse (14) vorgesehen ist.

21. Hängebahnanlage nach einem der Ansprüche 15-20, **dadurch gekennzeichnet, dass** die Trolleys je nach zu transportierender Ware unterschiedlich aufgebaut sind, insbesondere, dass sie Bügeltrolleys, Klappboxtrolleys und/oder Minitrolleys sind.

22. Hängebahnanlage nach einem der Ansprüche 15-21, **dadurch gekennzeichnet, dass** die Strecken (9) des Batchpuffers (8) und/oder des Retourwarenpuffers (15) ein- oder mehretagig und/oder in einem oder mehreren Gebäuden oder Gebäudeteilen angeordnet sind.

23. Hängebahnanlage nach einem der Ansprüche 15-22, **dadurch gekennzeichnet, dass** einem oder mehreren der Puffer (4, 9, 15) oder Sorter (10), insbesondere den Strecken (9) des Batchpuffers (8) und/oder des Retourwarenpuffers (15) ein Karussell (16) zugeordnet ist.

## Claims

1. A method for picking orders having at least one article assigned to each order and/or for managing returns,
- having a suspended conveyor system using trolleys, and
- having loading stations (1), a batch buffer (8) having a plurality of lanes (9), and packing stations (12),
- the trolleys and the articles comprising identification devices, **characterized in**
- **that** a trolley is routed to a loading station (1) and identified,
- **that** the trolley at the loading station (1) is loaded with an identified article,
- **that** the identification of the trolley and the article, which can also comprise a plurality of individual articles, are linked to each other in a management system,
- **that** the trolley is routed to a lane (9) of the batch buffer (8) or of a returned product buffer (15),
- **that** the trolley coming from the loading station (1) or from the returned product buffer (15), sorted according to the associated order but potentially chaotic with respect to a plurality of orders, is transported deliberately into a lane (9) of the batch buffer (8) reserved for this order and is stored in said lane (9) of the batch buffer (8),
- **that** after all articles of the order have been completely stored in the batch buffer (8), all trolleys having articles for the order are routed to a packing station (12), and
- **that** when separating the article from the trolley, the identification of the article and/or the trolley is captured, and the management system continues to manage the article and the trolley separately from that point onward.

2. The method according to claim 1, **characterized in that** trolleys from a plurality of orders are stored in one lane (9) of the batch buffer (8).

3. The method according to one or more of the preceding claims, **characterized in that** only trolleys from qualified orders are routed out of the lane (9) of the batch buffer (8) to the packing station (12) and that trolleys from non-qualified orders remain in the lane (9) of the batch buffer (8) or are routed to a lane (9) of the batch buffer (8) again.

4. The method according to one or more of the preceding claims, **characterized in that** the lane (9) of the batch buffer (8) is emptied as soon as a predetermined criterion, such as a processing priority, storage time, or quantity, percentage, or assignment of qualified orders for a lane (9) is met.

5. The method according to one or more of the preceding claims, **characterized in that** the trolleys from a plurality of qualified orders of a lane (9) of the batch buffer (8) are routed to a plurality of sorting lanes (11) of a sorter (10) before being routed to the packing station (12) and that particularly the trolleys in one sorting lane (11) are all buffered for the same order.

6. The method according to one or more of the preceding claims, **characterized in that** the trolleys from different orders or sorting lanes (11) are routed to the same packing station (12) if said trolleys meet a predetermined criterion, such as a shipping method or shipping priority.

7. The method according to one or more of the preceding claims, **characterized in that** the emptied trolleys are routed to an empty trolley buffer (4) and that the trolleys in the empty trolley buffer (4) are particularly sorted by type of trolley when buffered.

8. The method according to one or more of the preceding claims, **characterized in that** the trolleys in the returned product buffer (15) are handled and sorted analogously to the method for the batch buffer (8).

9. The method according to one or more of the preceding claims, **characterized in that** the trolleys in the returned product buffer (15) are provided with product criteria and can be individually assigned to particular orders.

10. The method according to one or more of the preceding claims, **characterized in that** the trolleys are preferably routed out of the returned product buffer (15) to the batch buffer (8) and that trolleys are buffered in the returned product buffer (15) in individual lanes, particularly sorted according to predetermined criteria such as frequency of request.

11. The method according to one or more of the preceding claims, **characterized in that** trolleys are routed out of the returned product buffer (15) and/or from the loading station (1) to a lane (9) of the batch buffer (8) for completing an order.

12. The method according to one or more of the preceding claims, **characterized in that** trolleys in the batch buffer (8) and/or in the returned product buffer (15) are fed into or out of the corresponding lanes and/or that trolleys in the batch buffer (8) and/or in the returned product buffer (15) are fed into or out of the packing station (12) between the order entry and the routing of the trolley for an order, in order to sort the trolleys according to predetermined product criteria.

13. The method according to one or more of the preceding claims, **characterized in that** trolleys in the batch buffer (8) and/or in the returned product buffer (15) are fed into a carousel (16) in order to sort the trolleys according to predetermined order criteria before routing the trolleys for an order to the packing station (12).

14. The method according to one or more of the preceding claims, **characterized in that** the packing stations (12) are used alternatively for picking orders or for accepting returns.

15. A suspended conveyor for picking orders having at least one article assigned to each order and/or for managing returns,
- having trolleys, and
- having loading stations (1), a batch buffer (8) having a plurality of lanes (9), and packing stations (12),
- the loading stations (1), the batch buffer (8), and the packing stations (12) being connected to each other by means of suspended conveyor tracks, and
- the trolleys and the articles comprising identification devices for performing the method according to one or more of the preceding claims,
**characterized in that**
- the suspended conveyor comprises a management system for identifying and intermittently linking a trolley with an article comprising a plurality of individual articles,
- identification detection devices (3) for a trolley and for the article are disposed in the region of the loading station (1) and the packing station (12), and
- the identification detection devices (3) are connected to the management system.

16. The suspended conveyor according to the preceding claim, **characterized in that** a sorter (10), particularly a matrix sorter, is disposed between the batch buffer (8) and the packing station (12).

17. The suspended conveyor according to any one of claims 15-16, **characterized in that** the sorter (1) comprises a plurality of sorting lanes (11) together comprising at least the capacity of a lane (9) of the batch buffer (8).

18. The suspended conveyor according to any one of claims 15-17, **characterized in that** an empty trolley buffer (4) and/or a returned product buffer (15) is associated with the suspended conveyor.

19. The suspended conveyor according to any one of the claims 15-18, **characterized in that** the batch buffer (8) is disposed overhead of the loading stations (1) and/or of the packing stations (12) and that the batch buffer (8) is connected to the loading stations (1) and/or to the packing stations (12), particularly by means of one or more inclined conveyors (7).

20. The suspended conveyor according to any one of claims 15-19, **characterized in that** a gate (14) is provided at the packing station (12).

21. The suspended conveyor according to any one of claims 15-20, **characterized in that** the trolleys are constructed differently depending on the article to be transported, particularly that the trolleys are frame trolleys, folding box trolleys, and/or mini-trolleys.

22. The suspended conveyor according to any one of claims 15-21, **characterized in that** the lanes (9) of the batch buffer (8) and/or of the returned product buffer (15) are disposed over one or more stories and/or in one or more buildings or parts of buildings.

23. The suspended conveyor according to any one of claims 15-22, **characterized in that** a carousel (16) is associated with one or more of the buffers (4, 9, 15) or sorters (10), particularly the lanes (9) of the batch buffer (8) and/or of the returned product buffer (15).

## Revendications

1. Procédé pour la préparation de commandes, avec au moins une marchandise attribuée à une commande individuelle et/ou à la gestion des retours,
- avec une installation de convoyeur suspendu avec des trolleys, ainsi
- qu'avec des emplacements de chargement (1), une zone-tampon de lots (8) avec plusieurs parcours (9) et des emplacements d'empaquetage (12),
- sachant que les trolleys et les marchandises présentent des dispositifs d'identification,
**caractérisé en ce qu'**
- un trolley est acheminé à un emplacement de chargement (1) et identifié,
- le trolley est chargé à l'emplacement de chargement (1) avec une marchandise identifiée,
- que les identifications du trolleys et de la marchandise, même composée de plusieurs éléments de marchandises, sont reliées les unes avec les autres dans un système de gestion,
- que le trolley est acheminé sur un parcours (9) de la zone-tampon de lots (8) ou d'une zone-tampon de marchandises en retour (15),
- que le trolley venant de l'emplacement de chargement (1) ou de la zone-tampon de marchandises en retour (15), trié selon la commande afférente, mais le cas échéant de manière chaotique pour plusieurs commandes, est transporté de manière ciblée sur un parcours (9) de la zone-tampon de lots (8) réservé pour cette commande et stocké sur ce parcours (9) de la zone-tampon de lots (8),
- que, une fois que toutes les marchandises de la commande ont complètement été stockées dans la zone-tampon de lots (8), tous les trolleys contenant les marchandises de la commande sont acheminés à un emplacement d'empaquetage (12) et
- que lors de l'enlèvement des marchandises depuis le trolley, l'identification de la marchandise et/ou du trolley est saisie et, à partir de ce moment, le système de gestion gère à nouveau séparément la marchandise et le trolley.

2. Procédé selon la revendication 1, **caractérisé en ce que** des trolleys de plusieurs commande sont stockés sur un parcours (9) de la zone-tampon de lots (8).

3. Procédé selon l'une ou plusieurs des revendications précédentes, **caractérisé en ce que** seuls les trolleys de commande qualifiées sont acheminés à l'emplacement d'empaquetage (12) depuis le parcours (9) de la zone-tampon de lots (8) et que les trolleys de commandes non qualifiées restent sur le parcours (9) de la zone-tampon de lots (8) ou sont acheminés à nouveau sur un parcours (9) de la zone-tampon de lots (8).

4. Procédé selon l'une ou plusieurs des revendications précédentes, **caractérisé en ce que** le parcours (9) de la zone-tampon de lots (8) est vidé aussitôt qu'un critère prédéterminé, par exemple une priorité de traitement, un temps de stockage ou un nombre, un pourcentage ou un taux d'occupation des commandes qualifiées d'un parcours (9) est satisfait.

5. Procédé selon l'une ou plusieurs des revendications précédentes, **caractérisé en ce que** les trolleys de plusieurs commandes qualifiées d'un parcours (9) de la zone-tampon de lots (8) sont acheminés vers plusieurs parcours de tri (11) d'une trieuse (10) avant d'être acheminés vers l'emplacement d'empaquetage (12) et que, en particulier, les trolleys sont mis en zone-tampon triés par commande sur un parcours de tri (11).

6. Procédé selon l'une ou plusieurs des revendications précédentes, **caractérisé en ce que** les trolleys de commandes ou de parcours de tri (11) différents sont acheminés au même emplacement d'empaquetage (12) s'ils répondent à un critère prédéterminé, par exemple un mode d'expédition ou une priorité d'expédition.

7. Procédé selon l'une ou plusieurs des revendications précédentes, **caractérisé en ce que** les trolleys vidés sont acheminés dans une zone-tampon pour trolleys vides (4) et que les trolleys, dans la zone-tampon pour trolleys vides (4), sont mis en zone-tampon triés en particulier par type de trolley.

8. Procédé selon l'une ou plusieurs des revendications précédentes, **caractérisé en ce que** les trolleys, dans la zone-tampon pour marchandises en retour (15), sont traités et triés de manière analogue au procédé effectué dans la zone-tampon de lots (8).

9. Procédé selon l'une ou plusieurs des revendications précédentes, **caractérisé en ce que** les trolleys, dans la zone-tampon pour marchandises en retour (15), sont pourvus de critères de marchandises et peuvent être attribués individuellement à des commandes déterminées.

10. Procédé selon l'une ou plusieurs des revendications précédentes, **caractérisé en ce que** les trolleys sont acheminés de préférence de la zone-tampon pour marchandises en retour (15) à la zone-tampon de lots (8) et que les trolleys sont mis en zone-tampon pour marchandises en retour (15) sur des parcours individuels, triés en particulier selon des critères prédéterminés tels que, par exemple, la fréquence de demande.

11. Procédé selon l'une ou plusieurs des revendications précédentes, **caractérisé en ce que** les trolleys, pour la complétion d'une commande, sont acheminés de la zone-tampon pour marchandises en retour (15) et/ou de l'emplacement de chargement (1) sur un parcours (9) de la zone-tampon de lots (8).

12. Procédé selon l'une ou plusieurs des revendications précédentes, **caractérisé en ce que** les trolleys, dans la zone-tampon de lots (8) et/ou dans la zone-tampon pour marchandises en retour (15), sont introduits et extraits aux parcours correspondants et/ou que les trolleys, dans la zone-tampon de lots (8) et/ou dans la zone-tampon pour marchandises en retour (15), sont introduits et extraits entre la réception d'une commande et l'amenée des trolleys d'une commande à l'emplacement d'empaquetage (12) en vue du tri des trolleys selon des critères de marchandises prédéterminés.

13. Procédé selon l'une ou plusieurs des revendications précédentes, **caractérisé en ce que** les trolleys, dans la zone-tampon de lots (8) et/ou dans la zone-tampon pour marchandises en retour (15), sont introduits dans un carrousel (16) avant l'amenée des trolleys d'une commande à l'emplacement d'empaquetage (12) en vue du tri des trolleys selon des critères de commande prédéterminés.

14. Procédé selon l'une ou plusieurs des revendications précédentes, **caractérisé en ce que** les emplacements d'empaquetage (12) sont utilisés en alternative pour la préparation des commandes ou pour la saisie des retours.

15. Installation de convoyeur suspendu pour la préparation de commandes, avec au moins une marchandise attribuée à une commande spécifique et/ou à la gestion des retours,
- avec des trolleys ; ainsi que
- qu'avec des emplacements de chargement (1), une zone-tampon de lots (8) avec plusieurs parcours (9) et des emplacements d'empaquetage (12),
- sachant que les emplacements de chargement (1), la zone-tampon de lots (8) et les emplacements d'empaquetage (12) sont reliés les uns avec les autres par des rails de convoyeur suspendu et
- sachant que les trolleys et les marchandises présentent des dispositifs d'identification pour l'exécution du procédé selon l'une ou plusieurs des revendications précédentes,
**caractérisée en ce que**
- l'installation de convoyeur suspendu comporte un système de gestion pour l'identification et l'association temporaire d'un trolley avec une marchandise, même composée de plusieurs éléments de marchandises,
- que des dispositifs de saisie d'identification (3) pour un trolley et la marchandise sont disposés dans la zone de l'emplacement de chargement (1) et de l'emplacement d'empaquetage (12) et
- que les dispositifs de saisie d'identification (3) sont reliés au système de gestion.

16. Installation de convoyeur suspendu selon la revendication précédente, **caractérisée en ce qu'**une trieuse (10), en particulier une trieuse à matrice, est disposée entre la zone-tampon de lots (8) et l'emplacement d'empaquetage (12).

17. Installation de convoyeur suspendu selon l'une des revendications 15-16, **caractérisée en ce que** la trieuse (10) comporte plusieurs parcours de tri (11), qui présentent ensemble au moins la capacité d'un parcours (9) de la zone-tampon de lots (8).

18. Installation de convoyeur suspendu selon l'une des revendications 15-17, **caractérisée en ce qu'**une zone-tampon pour trolleys vides (4) et/ou une zone-tampon de marchandises en retour (15) est/sont attribuée(s) à l'installation de convoyeur suspendu.

19. Installation de convoyeur suspendu selon l'une des revendications 15-18, **caractérisée en ce que** la zone-tampon de lots (8) est disposée au-dessus des emplacements de chargement (1) et/ou des emplacements d'empaquetage (12) et que la zone-tampon de lots (8) est reliée aux emplacements de chargement (1) et/ou aux emplacements d'empaquetage (12), en particulier à l'aide d'un ou de plusieurs convoyeur(s) incliné(s) (7).

20. Installation de convoyeur suspendu selon l'une des revendications 15-19, **caractérisée en ce qu'**un sas (14) est prévu à l'emplacement d'empaquetage (12).

21. Installation de convoyeur suspendu selon l'une des revendications 15-20, **caractérisée en ce que** les trolleys présentent une configuration différente selon la marchandise à convoyer, en particulier, qu'ils sont des trolleys à étrier, des trolleys à coffret repliable et/ou des minitrolleys.

22. Installation de convoyeur suspendu selon l'une des revendications 15-21, **caractérisée en ce que** les parcours (9) de la zone-tampon de lots (8) et/ou de la zone-tampon de marchandises en retour (15) sont disposés sur un ou plusieurs étage(s) et/ou dans un ou plusieurs bâtiment(s) ou partie(s) de bâtiment(s).

23. Installation de convoyeur suspendu selon l'une des revendications 15-22, **caractérisée en ce qu'**un carrousel (16) est attribué à une ou plusieurs des zone(s)-tampon(s) (4, 9, 15) ou trieuse(s) (10), en particulier aux parcours (9) de la zone-tampon de lots (8) et/ou de la zone-tampon de marchandises en retour (15).
